# DEMANDE DE BREVET EUROPEEN

(11) **EP 4 310 010 A1**
(43) Date de publication de la demande: **24.01.2024**
(21) Numéro de dépôt: 23183046.4
(22) Date de dépôt: 03.07.2023
(51) Int. Cl.: B65B 1/00, B25J 9/00, B25J 15/00, B25J 15/06, B25J 19/02, B65B 1/20, B65B 7/06, B65B 43/30, B65B 43/44, B65B 43/46, B65B 43/54, B65B 59/04, B65B 61/28, B65B 65/00, B25J 11/00, B25J 15/02

(54) **ENSACHEUSE COMPRENANT AU MOINS UN BRAS ROBOTISÉ POUR TRANSFÉRER DES SACS ENTRE AU MOINS DEUX MODULES**

(30) Priorité: 07.07.2022 FR 2206977
(71) Demandeur: Cetec Industrie Conditionnement, 24052 Périgueux (FR)
(72) Inventeur: LABRUE, Régis, 24000 PERIGUEUX (FR); MONDARY, Jean-François, 24640 BASSILAC-ET-AUBEROCHE (FR)
(74) Mandataire: Fantin, Laurent

(57) **Abrégé**

L'invention a pour objet une ensacheuse configurée pour remplir des sacs et comprenant, dans un sens de déplacement des sacs, au moins un poste d'alimentation en sacs vides (22), un poste de remplissage (24) ainsi qu'un poste de fermeture (26) ; caractérisée en ce que l'ensacheuse comprend :
- plusieurs modules (M1 à M4) comportant chacun au moins un poste parmi un poste d'alimentation en sacs vides (22), un poste de remplissage (24) et un poste de fermeture (26), les postes de remplissage et de fermeture (24, 26) étant positionnés dans des premier et deuxième modules différents,
- au moins un bras robotisé (36) configuré pour transférer les sacs entre au moins les premier et deuxième modules.

## Description

La présente demande se rapporte à une ensacheuse comprenant au moins un bras robotisé pour transférer des sacs entre au moins deux modules.

Selon un mode de réalisation, une ensacheuse est utilisée dans le domaine du conditionnement pour remplir des sacs de produit, notamment en poudre, en grains, en morceaux ou pulvérulent. Elle comprend un système de convoyage configuré pour déplacer des sacs, depuis un magasin de sacs jusqu'à un poste de stockage de sacs remplis, selon une direction de défilement, en passant par différents postes comme un poste d'alimentation en sacs vides, un poste de remplissage, un poste de fermeture ou un poste de palettisation par exemple.

Le système de convoyage est configuré pour déplacer les sacs d'un poste à l'autre, pas à pas, selon la direction de défilement, les sacs étant immobilisés, au niveau de chacun des postes, pendant une durée déterminée qui est la même pour tous les postes.

Ce système de convoyage comprend un ou plusieurs chariots cinématiquement liés, notamment un premier chariot qui assure le passage d'un premier sac du poste d'alimentation en sacs vides jusqu'au poste de remplissage, un deuxième chariot qui assure le passage d'un deuxième sac du poste de remplissage jusqu'au poste de fermeture ainsi qu'un troisième chariot qui assure le passage d'un troisième sac du poste de fermeture jusqu'au poste de palettisation.

Chaque chariot comprend des moyens de préhension pour saisir et relâcher un sac. Tous ces chariots sont guidés en translation parallèlement à la direction de défilement.

Pour assurer le mouvement de translation de va-et-vient des chariots, le système de convoyage comprend un mécanisme de déplacement, par exemple une courroie animée d'un mouvement de va-et-vient, selon un pas fixe donné, à laquelle tous les chariots sont reliés. En fonctionnement, tous les chariots saisissent simultanément les sacs dans les différents postes puis se translatent d'un pas donné pour les acheminer jusqu'au poste suivant au niveau duquel tous les chariots relâchent les sacs. En temps masqué, pendant le remplissage d'un sac par exemple, les chariots effectuent le trajet en sens inverse de manière à revenir chacun au poste précédent.

Selon ce mode de fonctionnement, chaque sac est immobilisé successivement au niveau de chaque poste pendant une durée déterminée, qui est la même pour tous les postes.

Or, dans certains cas, la durée nécessaire pour effectuer une première opération au niveau d'un premier poste est nettement inférieure à celle nécessaire pour effectuer une deuxième opération au niveau d'un deuxième poste. Ainsi, la durée pour remplir chaque sac peut être nettement inférieure à celle pour les désaérer. Dans ce cas, la cadence de l'ensacheuse est limitée à la cadence du poste de désaération. Pour augmenter la cadence, il est nécessaire de prévoir une deuxième ensacheuse identique à la première, ce qui n'est pas satisfaisant en termes de coûts et d'emprise au sol.

Selon une autre problématique, l'ensacheuse est peu évolutive. Ainsi, le système de convoyage est conçu pour une configuration de postes. L'ajout ou la suppression d'un poste engendre des modifications lourdes et coûteuses.

La présente invention vise à remédier à tout ou partie des inconvénients de l'art antérieur.

A cet effet, l'invention a pour objet une ensacheuse configurée pour remplir des sacs et comprenant dans un sens de déplacement des sacs, au moins un poste d'alimentation en sacs vides, un poste de remplissage ainsi qu'un poste de fermeture. Selon l'invention, l'ensacheuse comprend :
- plusieurs modules comportant chacun au moins un poste parmi un poste d'alimentation en sacs vides, un poste de remplissage et un poste de fermeture, les postes de remplissage et de fermeture étant positionnés dans des premier et deuxième modules différents,
- au moins un bras robotisé configuré pour transférer les sacs entre au moins les premier et deuxième modules, le bras robotisé comprenant au moins un premier outil de transfert comportant :
   ∘ une première platine reliée au bras robotisé,
   ∘ deux volets en L reliés chacun par une articulation à la première platine et configurés pour occuper un état rapproché dans lequel les volets en L définissent avec la première platine un logement configuré pour recevoir un sac plein ainsi qu'un état écarté dans lequel les volets en L autorisent un sac à sortir du logement,
   ∘ au moins une pince configurée pour pincer la tête du sac plein et le maintenir immobile.

Le fait de répartir les postes dans différents modules et de prévoir au moins un bras robotisé pour le transfert des sacs d'un module à l'autre permet d'obtenir une ensacheuse plus flexible, qui peut être modifiée et adaptée à une nouvelle configuration sans modification lourde et coûteuse

D'autres caractéristiques et avantages ressortiront de la description de l'invention qui va suivre, description donnée à titre d'exemple uniquement, en regard des dessins annexés parmi lesquels :
- La figure 1 est une vue schématique de dessus d'une ensacheuse illustrant une première configuration de l'invention,
- La figure 2 est une vue schématique de dessus d'une ensacheuse illustrant une deuxième configuration de l'invention,
- La figure 3 est une vue schématique de dessus d'une ensacheuse illustrant une troisième configuration de l'invention,
- La figure 4 est une vue schématique de dessus d'une ensacheuse illustrant une quatrième configuration de l'invention,
- La figure 5 est une vue de face d'un premier outil de transfert, adapté pour conformer un sac, illustrant un mode de réalisation de l'invention,
- La figure 6 est une vue de dessus du premier outil de transfert visible sur la figure 5,
- La figure 7 est une vue de dessus d'un deuxième outil de transfert, adapté pour transférer un sac vide, dans un premier état illustrant un mode de réalisation de l'invention,
- La figure 8 est une vue de dessus du deuxième outil de transfert visible sur la figure 7 dans un deuxième état,
- La figure 9 est une vue de face du deuxième outil de transfert visible sur la figure 7,
- La figure 10 est une vue latérale d'un troisième outil de transfert, adapté notamment pour les palettes vides, illustrant un mode de réalisation de l'invention,
- La figure 11 est une vue latérale d'une tête d'un bras robotisé, supportant plusieurs outils de transfert, illustrant un mode de réalisation de l'invention,
- La figure 12 est une vue schématique des postes de remplissage, de conformage et de fermeture d'une ensacheuse illustrant un mode de réalisation de l'invention,
- La figure 13 est une coupe selon la ligne XIII-XIII du poste de conformage illustrant un mode de réalisation de l'invention,
- La figure 14 est une vue en perspective d'un sac vide,
- La figure 15 est une vue en perspective d'un sac plein avant fermeture.

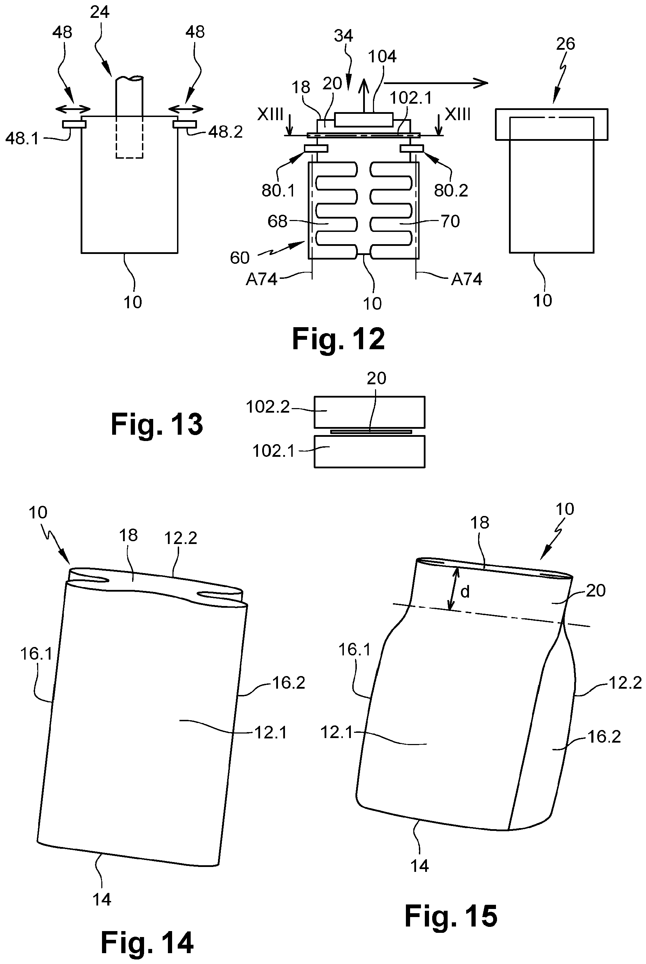

Comme illustré sur les figures 14 et 15, un sac 10 comprend deux faces latérales 12.1, 12.1 présentant des côtés inférieurs reliés entre eux de manière à former le fond 14 du sac 10, des côtés latéraux reliés entre eux directement ou par l'intermédiaire de soufflets de manière à former les bords latéraux 16.1, 16.2 du sac 10 ainsi que des côtés supérieurs non reliés, avant remplissage, formant l'ouverture 18 du sac 10. Comme illustré sur la figure 15, lorsque le sac 10 est plein, les faces latérales 12.1. 12.1 sont espacées à partir du fond 14 sur une certaine hauteur puis plaquées l'une contre l'autre sur une partie du sac qui s'étend à partir de l'ouverture sur une certaine distance d. Cette zone du sac au niveau de laquelle les faces latérales 12.1, 12.2 sont plaquées l'une contre l'autre est appelée tête 20 du sac.

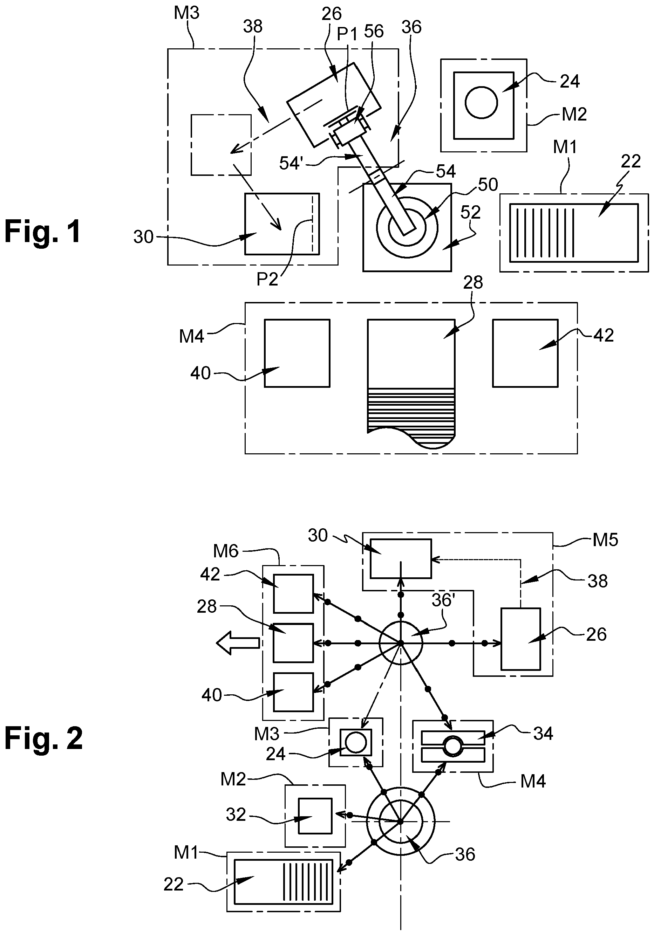

Selon différents modes de réalisation visibles sur les figures 1 à 4, une ensacheuse comprend un poste d'alimentation en sacs vides 22, un poste de remplissage 24, un poste de fermeture 26 ainsi qu'un poste de palettisation 28.

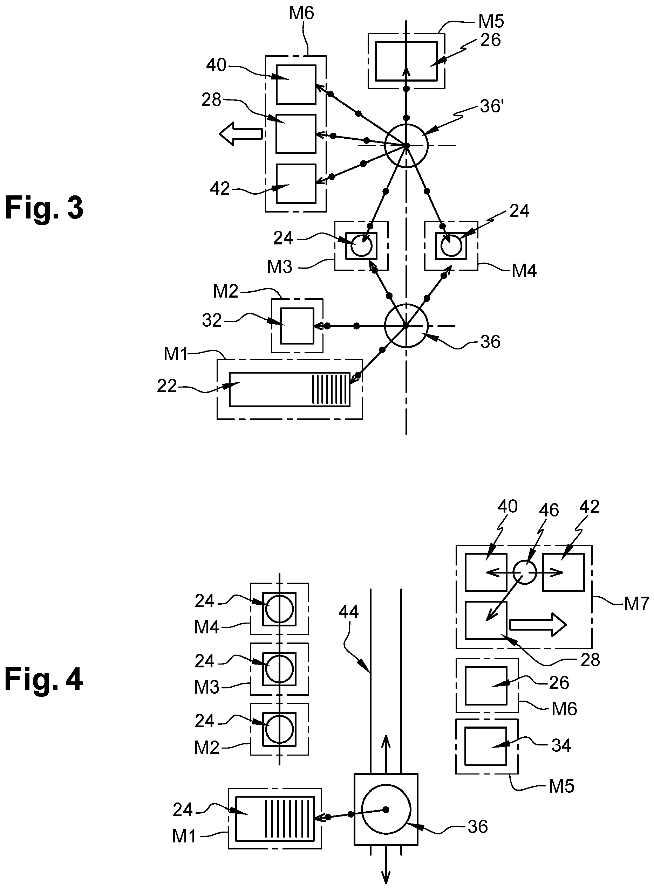

Une ensacheuse peut également comprendre un poste de contrôle 30, comme illustré sur la figure 1, un poste d'identification 32, comme illustré sur les figures 2 et 3 ou un poste de désaération et/ou de conformation 34, comme illustré sur les figures 2 et 4. Bien entendu, l'invention n'est pas limitée à cette liste de postes. D'autres postes sont envisageables, comme un poste de pesage par exemple.

Comme illustré sur les figures 3 et 4, une ensacheuse peut comprendre plusieurs postes ayant la même fonction. Ainsi, une ensacheuse peut comprendre deux postes de remplissage 24, comme illustré sur la figure 3, ou un nombre supérieur à 2, comme illustré sur la figure 4. Bien entendu, l'invention n'est pas limitée à ces modes de réalisation. Quel que soit le mode de réalisation, une ensacheuse comprend, dans le sens de déplacement des sacs, au moins un poste d'alimentation en sacs vides 22, un poste de remplissage 24 ainsi qu'un poste de fermeture 26.

Selon une caractéristique, l'ensacheuse comprend plusieurs modules M1 à M7 ainsi qu'au moins un bras robotisé 36 configuré pour déplacer les sacs d'un module à l'autre. Chaque module M1 à M7 comprend au moins un poste 22 à 34.

Selon une première configuration visible sur la figure 1, l'ensacheuse comprend quatre modules M1 à M4 disposés en série ainsi qu'un unique bras robotisé 36 configuré pour transférer les sacs d'un module à l'autre. Le premier module M1 comprend un unique poste : un poste d'alimentation en sacs vides 22. Le deuxième module M2 comprend un unique poste : un poste de remplissage 24. Le troisième module M3 comprend deux postes : un poste de fermeture 26, un poste de contrôle 30 et un système de transfert 38 configuré pour transférer les sacs du poste de fermeture 26 jusqu'au poste de contrôle 30. Enfin, le quatrième module M4 comprend un unique poste : un poste de palettisation 28.

A titre d'exemple, le système de transfert 38 peut être un convoyeur à bande, à rouleaux ou tout autre convoyeur indépendant du bras robotisé 36.

Selon cette première configuration, le bras robotisé 36 comprend une base fixe et il est configuré pour transférer les sacs d'un module à l'autre selon un ordre donné allant du premier module M1 jusqu'au quatrième module M4.

Selon une deuxième configuration visible sur la figure 2, l'ensacheuse comprend six modules M1 à M6 disposés en série ainsi que deux bras robotisés 36, 36'. Le premier module M1 comprend un unique poste : un poste d'alimentation en sacs vides 22. Le deuxième module M2 comprend un unique poste : un poste d'identification 32. Le troisième module M3 comprend un unique poste : un poste de remplissage 24. Le quatrième module M4 comprend un unique poste : un poste de désaération et/ou de conformation 34. Le cinquième module M5 comprend deux postes : un poste de fermeture 26, un poste de contrôle 30 et un système de transfert 38 configuré pour transférer les sacs du poste de fermeture 26 jusqu'au poste de contrôle 30. Le sixième module M6 comprend un unique poste : un poste de palettisation 28. Selon cette deuxième configuration, les premier et deuxième bras robotisés 36, 36' sont statiques. Le premier bras robotisé 36 est configuré pour transférer les sacs du premier module M1 jusqu'au quatrième module M4. En complément, le deuxième bras robotisé 36' est configuré pour transférer les sacs du troisième module M3 jusqu'au sixième module M6. Ainsi, les premier et deuxième bras robotisés 36, 36' sont configurés pour transférer, en fonction de leur disponibilité, les sacs du troisième module M3 comportant le poste de remplissage 24 vers le quatrième module M4 comportant le poste de désaération et/ou de conformation 34.

Selon une troisième configuration visible sur la figure 3, l'ensacheuse comprend six modules M1 à M6 dont deux sont positionnés en parallèle ainsi que deux bras robotisés 36, 36'. Le premier module M1 comprend un unique poste : un poste d'alimentation en sacs vides 22. Le deuxième module M2 comprend un unique poste : un poste d'identification 32. Le troisième module M3 comprend un unique poste : un poste de remplissage 24. Le quatrième module M4 comprend un unique poste : un poste de remplissage 24. Le cinquième module M5 comprend un unique poste : un poste de fermeture 26. Le sixième module M6 comprend un unique poste : un poste de palettisation 28.

Selon cette troisième configuration, les sacs se translatent successivement selon deux suites différentes de modules. Selon la première suite, les sacs sont transférés dans les modules suivants : le premier module M1, le deuxième module M2, le troisième module M3, le cinquième module M5 puis le sixième module M6. Selon la deuxième suite, les sacs sont transférés dans les modules suivants : le premier module M1, le deuxième module M2, le quatrième module M4, le cinquième module M5 puis le sixième module M6. Ainsi, les troisième et quatrième modules M3 et M4 sont positionnés en parallèle.

Selon cette troisième configuration, le premier bras robotisé 36 est configuré pour transférer les sacs du premier module M1 jusqu'au troisième ou quatrième module M3, M4. Le deuxième bras robotisé 36' est configuré pour transférer les sacs du troisième ou quatrième module M3, M4 jusqu'au sixième module M6.

Selon ces trois configurations, le module comportant le poste de palettisation 28 comprend également au moins une première zone de stockage 40 de palettes vides et éventuellement une deuxième zone de stockage 42 d'intercalaires. Selon un mode de fonctionnement, le bras robotisé 36, 36' utilisé pour transférer les sacs jusqu'au poste de palettisation 28 est également utilisé pour le transfert des palettes vides de la première zone de stockage 40 vers le poste de palettisation 28 et/ou pour le transfert des intercalaires de la deuxième zone de stockage 42 vers le poste de palettisation 28.

Selon une quatrième configuration, l'ensacheuse comprend sept modules M1 à M7, dont trois sont positionnés en parallèle, ainsi qu'un bras robotisé 36. Le premier module M1 comprend un unique poste : un poste d'alimentation en sacs vides 22. Le deuxième module M2 comprend un unique poste : un poste de remplissage. Le troisième module M3 comprend un unique poste : un poste de remplissage 24. Le quatrième module M4 comprend un unique poste : un poste de remplissage 24. Le cinquième module M5 comprend un unique poste : un poste de désaération et/ou de conformation 34. Le sixième module M6 comprend un unique poste : un poste de fermeture 26. Le septième module M7 comprend un unique poste : un poste de palettisation 28.

Selon cette quatrième configuration, les sacs se translatent successivement selon trois suites différentes de modules. Selon la première suite, les sacs sont transférés dans les modules suivants : le premier module M1, le deuxième module M2, le cinquième module M5, le sixième module M6 puis le septième module M7. Selon la deuxième suite, les sacs sont transférés dans les modules suivants : le premier module M1, le troisième module M3, le cinquième module M5, le sixième module M6 puis le septième module M7. Selon la troisième suite, les sacs sont transférés dans les modules suivants : le premier module M1, le quatrième module M4, le cinquième module M5, le sixième module M6 puis le septième module M7. Ainsi, les deuxième, troisième et quatrième modules M2, M3, M4 sont positionnés en parallèle. Selon cette quatrième configuration, le bras robotisé 36 n'est pas statique mais peut se déplacer, notamment en se translatant le long d'au moins une glissière 44.

Selon cette quatrième configuration, le septième module M7, comportant le poste de palettisation 28, comprend au moins bras robotisé 36 pour le transfert des palettes vides de la première zone de stockage 40 vers le poste de palettisation 28 et/ou pour le transfert des intercalaires de la deuxième zone de stockage 42 vers le poste de palettisation 28.

Bien entendu, l'invention n'est pas limitée à ces configurations pour l'ensacheuse.

Quelle que soit la configuration, une ensacheuse comprend plusieurs modules comportant chacun au moins un poste parmi un poste d'alimentation en sacs vides 22, un poste de remplissage 24 et un poste de fermeture 26, les postes de remplissage et de fermeture 24, 26 étant positionnés dans des premier et deuxième modules différents, ainsi qu'au moins un bras robotisé 36 pour transférer les sacs entre au moins les premier et deuxième modules.

Le fait de répartir les postes dans différents modules et de prévoir au moins un bras robotisé pour le transfert des sacs d'un module à l'autre permet d'obtenir une ensacheuse plus flexible, qui peut être modifiée et adaptée à une nouvelle configuration sans modifications lourdes et coûteuses.

Selon une configuration, dans un module comportant un unique poste, les sacs sont immobilisés temporairement dans une seule position.

Pour certains de ces modules, chaque sac est maintenu immobile dans une position donnée par le bras robotisé 36, 36'. En variante, le poste comprend un système de maintien 48 distinct du bras robotisé 36, 36', comme illustré sur la figure 12. Ainsi, comme illustré sur la figure 12, le poste de remplissage 24 comprend un système de maintien 48 de chaque sac sous la forme de deux pinces 48.1, 48.2, positionnées en vis-à-vis, de part et d'autre du sac 10 et configurées pour pincer les bords latéraux 16.1, 16.2 du sac au niveau de sa tête 20. D'autres solutions sont envisageables pour maintenir les sacs immobiles tour à tour au niveau d'un poste indépendamment des bras robotisés.

Pour d'autres modules, comme le module M3 de la première configuration, chaque sac est configuré pour se déplacer entre une première position P1 au niveau de laquelle le bras robotisé 36, 36' relâche le sac et une deuxième position P2 au niveau de laquelle le sac est repris par le bras robotisé 36, 36'.

Selon un mode de réalisation, le bras robotisé 36, 36' comprend une base 50 généralement pivotante selon un axe vertical par rapport à un support 52, plusieurs segments 54, 54', généralement deux, mis bout à bout et reliés entre eux par une articulation présentant au moins un axe de pivotement sensiblement horizontal, un premier segment 54 étant relié à la base 50 par une articulation présentant au moins un axe de pivotement sensiblement horizontal, ainsi qu'une tête 56 reliée au segment 54', le plus éloigné de la base 50, par une articulation présentant au moins deux axes de pivotement et éventuellement trois axes de pivotement orthogonaux.

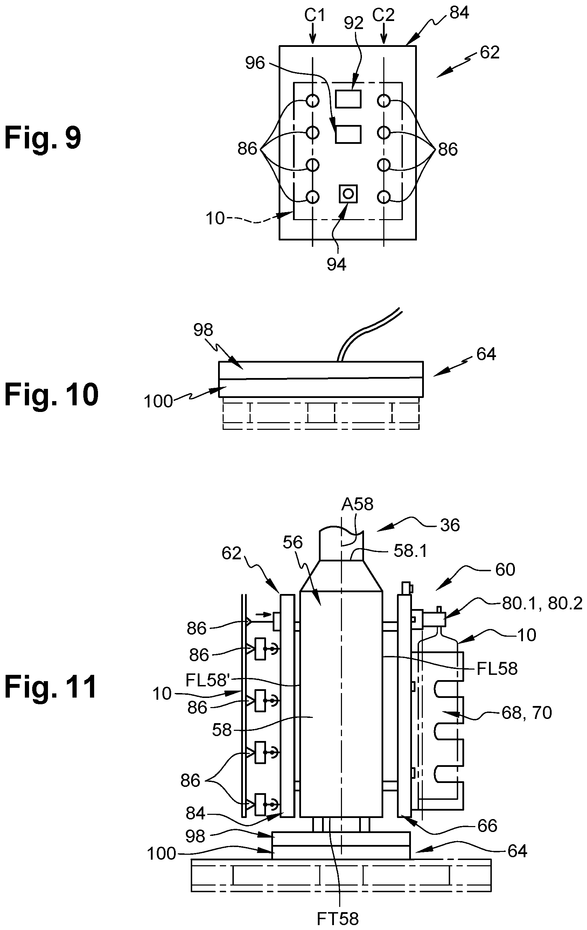

Comme illustré sur la figure 11, la tête 56 du bras robotisé comprend un corps 58, qui présente un axe de pivotement A58 et une première extrémité 58.1 reliée à un segment 54' du bras robotisé 36, configuré pour supporter au moins un outil de transfert 60, 62, 64.

Selon une configuration, le corps 58 comprend au moins une face latérale FL58, sensiblement parallèle à l'axe de pivotement A58, à laquelle peut être relié un outil de transfert ainsi qu'une face d'extrémité FT58, sensiblement perpendiculaire à l'axe de pivotement A58 et située à l'opposé de la première extrémité 58.1, à laquelle peut être relié un autre outil de transfert. Selon un agencement, le corps 58 comprend au moins deux faces latérales FL58, FL58' opposées auxquelles sont reliés des premier et deuxième outils de transfert 60, 62 ainsi qu'une face d'extrémité FT58 à laquelle est relié un troisième outil de transfert 64.

En fonction de comment est utilisé l'outil de transfert 60, 62, 64, l'axe de pivotement A58 peut être vertical, comme illustré sur la figure 11, horizontal ou incliné.

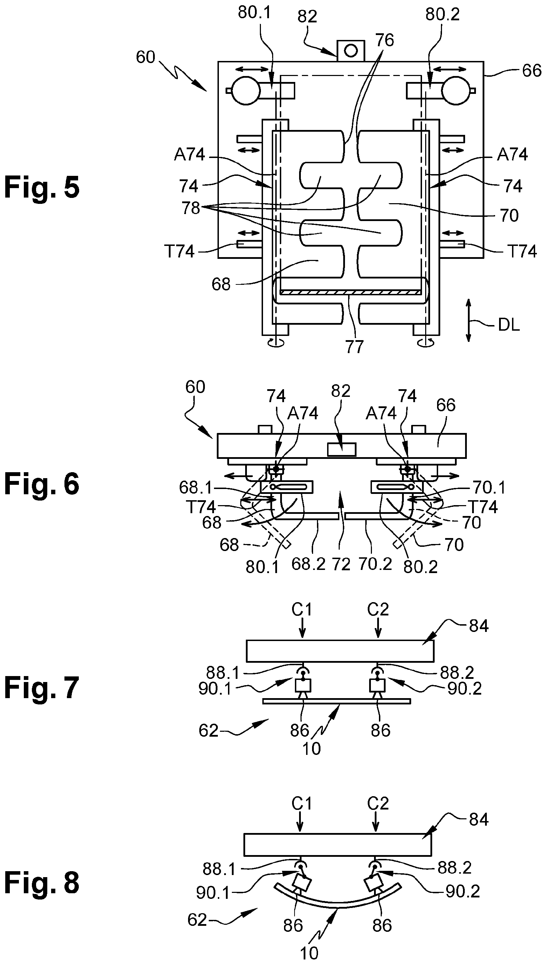

Comme illustré sur les figures 5 et 6, un premier outil de transfert 60 configuré pour transférer un sac plein comprend une première platine 66 reliée à la tête 56 du bras robotisé par une liaison qui est de préférence démontable ainsi que deux volets en L 68, 70 articulés par rapport à la première platine 66 et configurés pour occuper un état rapproché, visible en trait fort sur les figures 5 et 6, dans lequel les volets en L 68, 70 définissent avec la première platine 66 un logement 72 adapté pour recevoir un sac 10 plein et le conformer ainsi qu'un état écarté, visible en pointillés sur la figure 6, dans lequel les volets en L 68, 70 autorisent un sac à sortir du logement 72.

Selon une configuration, chaque volet en L 68, 70 présente une première aile 68.1, 70.1 reliée par une articulation 74 à la première platine 66 et une deuxième aile 68.2, 70.2 présentant un bord libre 76, approximativement perpendiculaire à la première aile 68.1, 70.1 et relié à cette dernière par une zone de jonction. Lorsque les volets en L 68, 70 occupent l'état rapproché, les premières ailes 68.1, 70.1 des deux volets en L 68, 70 sont sensiblement parallèles entre elles et perpendiculaires à la première platine 66 et les deuxièmes ailes 68.2, 70.2 des deux volets en L 68, 70 sont sensiblement coplanaires et parallèles à la première platine 66. Les bords libres 76 des deux volets sont sensiblement parallèles entre eux et à la première platine 66 et sont orientés selon une direction longitudinale DL correspondant à la hauteur du sac (direction allant du fond 14 à l'ouverture 18, parallèle aux bords latéraux 16.1, 16.2). A l'état rapproché, les premières ailes 68.1, 70.1 des deux volets en L 68, 70 sont séparées entre elles d'une distance sensiblement égale à celle séparant les bords latéraux 16.1,16.2 d'un sac plein. Les deuxièmes ailes 68.2, 70.2 des volets 68, 70 et la première platine 66 sont séparées d'une distance sensiblement égale à celle séparant les faces latérales 12.1, 12.2 d'un sac plein en dehors de la tête 20. Cet agencement des deux volets en L 68, 70 permet de conformer les sacs pleins.

Selon un mode de réalisation, un bord libre 76 d'au moins un volet en L 68, 70, et de préférence des deux volets en L 68, 70, présente des découpes 78 sur sa longueur de manière à former un peigne. Cet agencement des bords libres 76 permet d'augmenter les frottements entre les volets en L 68, 70 et un sac plein positionné dans le logement 72, contribuant à assurer un meilleur maintien du sac, notamment lorsque les bords libres 76 et le sac plein sont en position verticale. Comme illustré sur la figure 5, ces découpes 78 permettent également le passage d'un support, comme un tapis 77 par exemple, sur lequel sont positionnés les sacs avant d'être saisis par le premier outil de transfert 60.

Selon un premier mode de réalisation, chaque articulation 74 comprend au moins un axe de pivotement A74, sensiblement parallèle à la direction longitudinale DL, permettant à chaque volet 68, 70 de pivoter entre les états rapproché et écarté. Selon un deuxième mode de réalisation, chaque articulation 74 comprend une liaison glissière T74, sensiblement perpendiculaire à la direction longitudinale DL et parallèle à la première platine 66, permettant aux volets en L 68, 70 de se translater en sens opposé selon une direction perpendiculaire à la direction longitudinale DL entre les états rapproché et écarté. Selon un autre mode de réalisation visible sur les figures 5 et 6, chaque articulation 74 comprend un axe de pivotement A74 et une liaison glissière T74. Selon ce mode de réalisation, les volets en L 68, 70 pivotent autour des axes de pivotement A74 lors de la prise d'un sac plein afin de le conformer et se translatent selon les liaisons glissières T74 lorsque le sac plein est relâché lors de la palettisation.

Le premier outil de transfert 60 comprend des actionneurs pour permettre, en fonction des cas, aux volets 68, 70 de pivoter autour des axes de pivotement A74 et/ou de se translater selon les liaisons glissières T74.

Selon une particularité de l'invention, le premier outil de transfert 60 comprend au moins une pince configurée pour pincer la tête du sac plein et le maintenir immobile. Selon une configuration, le premier outil de transfert 60 comprend des première et deuxième pinces 80.1, 80.2 disposées en vis-à-vis et configurées pour pincer les bords latéraux 16.1, 16.2 de chaque sac plein au niveau de sa tête 20. Ces pinces 80.1, 80.2 sont configurées pour occuper un état activé dans lequel elles pincent les bords latéraux 16.1, 16.2 du sac plein et le maintiennent sensiblement immobile ainsi qu'un état désactivé dans lequel elles ne pincent pas les bords latéraux 16.1, 16.2 du sac plein, qui n'est plus retenu.

Comme illustré sur la figure 12, les pinces 80.1, 80.2 sont à l'état activé notamment lors du transfert des sacs pleins du poste de remplissage 24 jusqu'au poste de désaération et/ou de conformation 34 ou jusqu'au poste de fermeture 26. Elles permettent de conserver l'ouverture 18 et les côtés supérieurs des parois latérales 12.1, 12.2 sensiblement horizontaux afin de garantir une fermeture optimale, sensiblement parallèle aux côtés supérieurs des parois latérales 12.1, 12.2.

Comme illustré sur la figure 5, le premier outil de transfert 60 peut être équipé d'une caméra 82 pour faciliter la dépose des sacs lors de la palettisation.

Selon un mode de réalisation, un deuxième outil de transfert 62 est configuré pour transférer un sac vide.

Selon un mode de réalisation, ce deuxième outil de transfert 62 comprend une deuxième platine 84 reliée à la tête 56 du bras robotisé par une liaison qui est de préférence démontable ainsi que plusieurs ventouses 86 solidaires de la deuxième platine 84 et configurées pour occuper un état activé dans lequel chaque ventouse 86 maintient par aspiration un sac et un état désactivé dans lequel chaque ventouse 86 ne maintient pas le sac.

Selon un agencement visible sur les figures 7 à 9, les ventouses 86 sont agencées selon deux colonnes C1, C2 sensiblement parallèles entre elles, les ventouses 86 de la première colonne C1 étant positionnées à proximité du premier bord latéral 16.1 du sac 10, les ventouses 86 de la deuxième colonne C2 étant positionnées à proximité du deuxième bord latéral 16.2 du sac 10.

Selon une configuration, le deuxième outil de transfert 62 comprend un premier support 88.1 pour les ventouses 86 de la première colonne C1 ainsi qu'un deuxième support 88.2 pour les ventouses 86 de la deuxième colonne C2, les premier et deuxième supports 88.1, 88.2 étant reliés à la deuxième platine 84 par des articulations 90.1, 90.2 permettant aux ventouses 86 des deux colonnes C1, C2 de pivoter en sens opposé, comme illustré sur les figures 7 et 8. Bien entendu, l'invention n'est pas limitée à ce mode de réalisation. Les ventouses 86 des première et deuxième colonnes C1, C2 sont reliées à la deuxième platine 84 de manière à ce que les ventouses 86 des deux colonnes C1, C2 puissent pivoter en sens opposé afin de courber le sac saisi. Cette configuration permet de courber le sac vide afin d'augmenter sa raideur selon sa hauteur et de faciliter le décollement du sac de la pile de sacs vides.

Pour compenser le pivotement des ventouses 86 des première et deuxième colonnes C1, C2, les ventouses 86 peuvent se déformer ou être réalisées en un matériau favorisant le glissement des ventouses 86 sur les sacs et/ou la dépression générée au niveau des ventouses 86 est ajustée de manière à favoriser le glissement des ventouses 86 sur les sacs.

Le deuxième outil de transfert 62 peut également comprendre un système d'ouverture 92 des sacs comme au moins une ventouse par exemple, un système d'identification 94 des sacs comme une caméra, un lecteur de QR- codes, de code-barres ou d'identifiants, et/ou un système de marquage 96 comme une tête de pose d'étiquettes. Bien entendu, l'invention n'est pas limitée à cette liste d'accessoires.

Le troisième outil de transfert 64 est configuré pour transférer au moins une palette vide. Il comprend une troisième platine 98 reliée à la tête 56 du bras robotisé par une liaison qui est de préférence démontable ainsi qu'un système de préhension 100 adapté pour manipuler des palettes vides. Selon un mode de réalisation, ce système de préhension 100 fonctionne par aspiration et permet de manipuler non seulement les palettes vides mais également d'autres éléments comme des intercalaires en carton.

Selon une configuration visible sur les figures 1 et 11, la tête 56 du bras robotisé 36 supporte simultanément les trois outils de transfert 60, 62, 64.

Selon les configurations visibles sur les figures 2 et 3, la tête 56 du premier bras robotisé 36 supporte des premier et deuxième outils de transfert 60, 62 et la tête 56 du deuxième bras robotisé 36' supporte des deuxième et troisième outils de transfert 62, 64.

Selon la configuration visible sur la figure 4, la tête 56 du bras robotisé 36 mobile supporte des premier et deuxième outils de transfert 60, 62.

Le principe de fonctionnement de l'ensacheuse est maintenant décrit au regard des figures 1, 12 et 13.

Le bras robotisé 36 saisit, en utilisant le deuxième outil de transfert 62, un sac vide au niveau du module M1 comportant le poste d'alimentation en sacs vides 22. Les sacs vides peuvent être positionnés horizontalement ou verticalement. Le bras robotisé 36 permet de positionner le deuxième outil de transfert 62 soit horizontalement soit verticalement en fonction de la position des sacs vides au niveau du poste d'alimentation 12.

Une caméra fixée sur le deuxième outil de transfert 62 peut être utilisée pour reconnaître le sac vide et sa position.

Le bras robotisé 36 transfère le sac vide 10 du module M1 vers le module M2 intégrant le poste de remplissage 24. Au niveau de ce poste, le sac vide 10 est maintenu par un système de maintien 48 indépendant du bras robotisé 36. Ce dernier relâche le sac vide 10 et peut réaliser au moins une autre tâche comme prendre un sac plein en sortie du poste de fermeture 26 et le déposer sur une palette au niveau du poste de palettisation 28 ou positionner une palette vide ou un intercalaire au niveau du poste de palettisation 28.

Lorsque le sac 10 est rempli, le bras robotisé 36, 36' le saisit au niveau du poste de remplissage 14 grâce aux pinces 80.1, 80.2. Cette prise avec les pinces 80.1, 80.2 permet de garantir que les bords supérieurs des faces latérales 12.1, 12.2 du sac plein soient toujours orientés horizontalement lors du transfert du sac plein vers le poste suivant.

Lors de la prise du sac plein 10, les volets en L 68, 70 sont à l'état écarté pour permettre au sac d'être positionnée entre les volets en L 68, 70. Lorsque le sac plein 10 est positionné au niveau de l'espace 72, les volets en L 68, 70 sont pivotés jusqu'à l'état rapproché. Ce pivotement permet de conformer le sac plein 10 et de le maintenir pendant le déplacement.

Selon un mode opératoire, le sac plein 10 est directement transféré vers le poste de fermeture 26.

Selon un mode opératoire visible sur la figure 12, le premier outil de transfert 60 est utilisé pour transférer le sac plein vers un poste de désaération et/ou de conformation 34.

Selon un mode de réalisation visible sur les figures 12 et 13, le poste de conformation 34 comprend deux éléments fixes et rigides 102.1, 102.2, comme des plaques par exemple, faiblement espacés de manière à permettre l'insertion d'une tête d'un sac plein 10 et empêcher le passage de la partie remplie d'un sac plein ainsi qu'au moins une pince 104 configurée pour soulever le sac plein 10 afin de plaquer la partie remplie du sac plein contre les deux éléments fixes et rigides 102.1, 102.2. L'action de soulever le sac plein permet de tasser le produit contenu dans le sac et de finaliser la conformation du sac plein 10. Lors de cette action de soulèvement, le sac plein 10 est maintenu par les volets en L 68, 70 et relâché par les pinces 80.1, 80.2.

En suivant, le sac plein 10 peut être transféré vers le poste de fermeture 28 en utilisant la pince 104 du poste de désaération et/ou de conformation 34 ou en utilisant le premier outil de transfert 60, les pinces 80.1, 80.2 étant à l'état activé.

En sortie du module M3 intégrant le poste de fermeture 28, le sac plein 10 est repris par le premier outil de transfert 60. En suivant, la tête 56 du bras robotisé 36 pivote de manière à orienter le sac plein 10 horizontalement. En suivant, le sac plein 10 est positionné au-dessus du poste de palettisation 28 et orienté correctement en fonction du plan de chargement de la palette présente dans le poste de palettisation 28. Enfin, le sac plein 10 est lâché en écartant par translation les volets en L 68, 70.

## Revendications

1. Ensacheuse configurée pour remplir des sacs qui comportent chacun deux faces latérales (12.1, 12.1) présentant des côtés inférieurs reliés, des côtés latéraux reliés entre eux pour former des bords latéraux (16.1, 16.2), des côtés supérieurs non reliés, avant remplissage, formant une ouverture (18) ainsi qu'une tête (20) ; l'ensacheuse comprenant, dans un sens de déplacement des sacs, au moins un poste d'alimentation en sacs vides (22), un poste de remplissage (24) ainsi qu'un poste de fermeture (26) ; **caractérisée en ce que** l'ensacheuse comprend :
- plusieurs modules (M1 à M7) comportant chacun au moins un poste parmi un poste d'alimentation en sacs vides (22), un poste de remplissage (24) et un poste de fermeture (26), les postes de remplissage et de fermeture (24, 26) étant positionnés dans des premier et deuxième modules différents,
- au moins un bras robotisé (36, 36') configuré pour transférer les sacs entre au moins les premier et deuxième modules, le bras robotisé comprenant au moins un premier outil de transfert (60) comportant :
∘ une première platine (66) reliée au bras robotisé (36),
∘ deux volets en L (68, 70) reliés chacun par une articulation (74) à la première platine (66) et configurés pour occuper un état rapproché dans lequel les volets en L (68, 70) définissent avec la première platine (66) un logement (72) configuré pour recevoir un sac plein ainsi qu'un état écarté dans lequel les volets en L (68, 70) autorisent un sac à sortir du logement (72),
∘ au moins une pince configurée pour pincer la tête (20) du sac plein et le maintenir immobile.

2. Ensacheuse selon la revendication précédente, **caractérisée en ce que** le premier outil de transfert (60) comprend des première et deuxième pinces (80.1, 80.2) disposées en vis-à-vis et configurées pour pincer les bords latéraux (16.1, 16.2) de chaque sac plein au niveau de sa tête (20).

3. Ensacheuse selon la revendication 1 ou 2, **caractérisée en ce que** chaque volet en L (68, 70) présente une première aile (68.1, 70.1) reliée par l'articulation (74) à la première platine (66) ainsi qu'une deuxième aile (68.2, 70.2) présentant un bord libre (76), approximativement perpendiculaire à la première aile (68.1, 70.1), à l'état rapproché, les premières ailes (68.1, 70.1) des deux volets en L (68, 70) étant séparées entre elles d'une distance sensiblement égale à celle séparant les bords latéraux (16.1, 16.2) d'un sac plein, les deuxièmes ailes (68.2, 70.2) des deux volets en L (68, 70) et la première platine (66) étant séparées d'une distance sensiblement égale à celle séparant les faces latérales (12.1, 12.2) d'un sac plein en dehors de la tête (20).

4. Ensacheuse selon l'une des revendications précédentes, **caractérisée en ce que** chaque articulation (74) comprend au moins un axe de pivotement (A74) permettant à chaque volet (68, 70) de pivoter entre les états rapproché et écarté.

5. Ensacheuse selon l'une des revendications précédentes, **caractérisée en ce que** chaque articulation (74) comprend une liaison glissière (T74) permettant aux volets en L (68, 70) de se translater en sens opposé entre les états rapproché et écarté.

6. Ensacheuse selon l'une des revendications précédentes, **caractérisée en ce que** le bord libre (76) d'au moins un volet en L (68, 70) présente des découpes (78) sur sa longueur de manière à former un peigne.

7. Ensacheuse selon l'une des revendications précédentes, **caractérisée en ce qu'**elle comprend un poste de conformation (34) comportant deux éléments fixes et rigides (102.1, 102.2) faiblement espacés de manière à permettre l'insertion d'une tête (20) d'un sac plein et à empêcher le passage de la partie remplie du sac plein ainsi qu'au moins une pince (104) configurée pour soulever le sac plein afin de plaquer la partie remplie du sac plein contre les deux éléments fixes et rigides (102.1, 102.2).

8. Ensacheuse selon l'une des revendications précédentes, **caractérisée en ce que** le bras robotisé (36) est configuré pour supporter simultanément un premier outil de transfert (60) configuré pour transférer un sac plein, un deuxième outil de transfert (62) configuré pour transférer un sac vide ainsi qu'un troisième outil de transfert (64) configuré pour transférer au moins des palettes vides.

9. Ensacheuse selon la revendication précédente, **caractérisée en ce que** le bras robotisé comprend une tête (56) comportant un corps (58) qui présente un axe de pivotement (A58) et une première extrémité (58.1) reliée à un segment (54') du bras robotisé (36), au moins deux faces latérales (FL58) sensiblement parallèles à l'axe de pivotement (A58) auxquelles sont reliés les premier et deuxième outils de transfert (60, 62) ainsi qu'une face d'extrémité (FT58) sensiblement perpendiculaire à l'axe de pivotement (A58), située à l'opposé de la première extrémité (58.1) à laquelle est relié le troisième outil de transfert (64).

10. Ensacheuse selon l'une des revendications précédentes, **caractérisée en ce que** le bras robotisé (36, 36') comprend un deuxième outil de transfert (62) comportant une deuxième platine (84) reliée au bras robotisé ainsi que plusieurs ventouses (86) configurées pour occuper un état activé dans lequel chaque ventouse (86) maintient par aspiration un sac et un état désactivé dans lequel chaque ventouse (86) ne maintient pas le sac, les ventouses (86) étant agencées selon deux colonnes (C1, C2) sensiblement parallèles entre elles, les ventouses (86) des première et deuxième colonnes (C1, C2) étant reliées à la deuxième platine (84) de manière à ce que les ventouses (86) des première et deuxième colonnes (C1, C2) puissent pivoter en sens opposé afin de courber le sac saisi.
